(19)

Europäisches
Patentamt
European
Patent Office
Office européen
des brevets

(11)  **EP 4 575 979 A1**

(12)  **EUROPEAN PATENT APPLICATION**

(43) Date of publication:
**25.06.2025  Bulletin 2025/26**

(51) International Patent Classification (IPC):
**G06T 3/4053** (2024.01)       **G06T 5/60** (2024.01)
**G06T 11/00** (2006.01)

(21) Application number: **24221232.2**

(22) Date of filing: **18.12.2024**

(52) Cooperative Patent Classification (CPC):
**G06T 3/4053; G06T 5/60; G06T 11/00;**
G06T 2207/20012; G06T 2207/20021;
G06T 2207/20081; G06T 2207/20221

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.12.2023  JP 2023212964**

(71) Applicant: **CANON KABUSHIKI KAISHA
Tokyo 146-8501 (JP)**

(72) Inventor: **YAMAMOTO, Masashi
Tokyo, 146-8501 (JP)**

(74) Representative: **Canon Europe Limited
European Intellectual Property Group
4 Roundwood Avenue
Stockley Park
Uxbridge UB11 1AF (GB)**

(54)  **INFORMATION PROCESSING APPARATUS, INFORMATION PROCESSING METHOD, AND STORAGE MEDIUM**

(57)    An information processing apparatus divides an input image into a plurality of divided images and selects an appropriate image generator for each divided image from among a plurality of image generators based on the divided images of the input image. The information processing apparatus generates a plurality of generated images from the input image or the divided images of the input image using the plurality of selected image generators and combines two or more of the generated images.

FIG.1

EP 4 575 979 A1

**Description**

TECHNICAL FIELD

The present disclosure relates to an information processing technique for generating an image.

BACKGROUND

Description of the Related Art

There is an information processing technique for generating an image with high image quality by inputting an image with low image quality, which contains high noise, blur, or the like, to image generators such as machine learning models created in advance. A feature, hue, and the like of an image generated by each image generator can vary depending on differences in components, learning data, and the like. Accordingly, even when the same image is input to a plurality of image generators including different components, learning data, and the like, the image generators may finally output images with different image qualities. For example, if a user wishes to generate an image with desired image quality based on a user's personal preference, or an image with favorable image quality based on a user's subjective evaluation, the user can check the performance of each image generator in advance and can use the image generator for generating an image with favorable image quality based on a user's subjective evaluation. However, in many cases, the use of only one image generator may be insufficient to generate an image with desired image quality based on a user's personal preference, and may be insufficient to generate an image with favorable image quality from an image with low image quality. In other words, some image generators are good at generating images in terms of spatial features and hue within the images, and other image generators are not good at generating images in terms of spatial features and hue within the images. Therefore, images with insufficient image quality may be generated in some cases.

Japanese Patent Application Laid-Open No. 2022-6869 discusses a technique in which one image is processed by a plurality of image generators and the processed images are combined to generate an image by appropriately removing noise or the like. In the technique discussed in Japanese Patent Application Laid-Open No. 2022-6869, images captured by a magnetic resonance imaging apparatus, an ultrasonic diagnostic apparatus, or the like are described as examples of input images. Such images have different levels of noise depending on spatial areas within the image. Accordingly, if noise is removed by one image generator, an image with image quality that varies from area to area can be generated. The technique discussed in Japanese Patent Application Laid-Open No. 2022-6869 is capable of enhancing the image quality of an entire image by combining a plurality of images generated by a plurality of image generators that are good at generating images by removing noise of different levels and the like in accordance with a predetermined area pattern.

However, there is a possibility that the image quality of an image generated by any of the plurality of image generators discussed in Japanese Patent Application Laid-Open No. 2022-6869 is unable to match a desired image quality.

SUMMARY OF THE INVENTION

The present invention is directed to generating an image with desired image quality.

According to a first aspect of the present invention, there is provided an information processing apparatus comprising a division means for dividing an input image into a plurality of divided images; a selection means for selecting an appropriate image generator for each of the divided images from among a plurality of image generators based on the divided images of the input image; an image generation means for generating a plurality of generated images from the input image (e.g., from the divided images of the input image) using the plurality of image generators selected by the selection means; and a combining means for combining two or more of the generated image.

According to a second aspect of the present invention, there is provided an information processing method comprising dividing an input image into a plurality of divided images; selecting an appropriate image generator for each of the divided images from among a plurality of image generators based on the divided images of the input image; generating a plurality of generated images from the input image or the divided images of the input image using the plurality of image generators selected by the selecting method step; and combining two or more of the generated images.

According to a third aspect of the present invention, there is provided a non-transitory computer-readable storage medium storing a computer-executable program for causing a computer to perform the method of the second aspect.

Known image processing techniques do not consider that the level of noise may vary depending on a spatial area within an image. Accordingly, an image with high image quality cannot be generated unless the noise level corresponding to each area is recognized. For images obtained by image capturing feature of the image (e.g., hue, brightness and/or noise levels) in each area within the images are indefinite. Therefore, it is likely that an image with desired image quality cannot be generated (i.e., even when known image processing techniques are applied to the captured images). According to embodiments of the present disclosure, the input image is divided into separately processable image portions, which means that the quality of the combined generated image can achieve a desired image quality.

Optional features will now be set out. These are applicable singly or in any combination with any aspect of the disclosure.

The image generation means may be configured to generate at least one, or each, of the generated images from the (respective) input divided images using the image generator corresponding to the input divided image selected by the selection means, thereby obtaining the generated images corresponding to the respective input divided images.

In embodiments, the image generation means may be configured to generate the generated images (e.g., at least one, or each, of the generated images) from the divided images (e.g., the respective divided image(s)) using the image generators selected for the divided images by the selection means (e.g., the respective image generator(s)). For example, a first generated image may be generated by a first image generator selected for a first divided image, and a second generated image may be generated by a second image generator selected for a second divided image.

The combining means may be configured to combine the plurality of generated images generated for the divided images (e.g., by the image generation means) by arranging the generated images at positions corresponding to the divided images of the input image.

The image generation means may be configured to generate the plurality of generated images from the input image using the plurality of image generators selected for the divided images (e.g., by the selection means) and wherein the combining means may be configured to extract area images generated by the appropriate image generator (e.g., selected for each of the divided images by the selection means) from among the plurality of generated images generated from the input image. Further, the combining means may be configured to combine the area images by arranging the area images at positions corresponding to the divided images (e.g., the respective divided images) of the input image.

The selection means may be configured to select an appropriate image generator for at least one, or each, of the divided images of the input image based on a result of a user's subjective evaluation performed on a plurality of generated images preliminarily generated by the plurality of image generators from a plurality of images. Consequently, by combining two or more images generated by the image generator with the highest image quality evaluation result, the overall quality of the generated image is improved.

The selection means may be configured to select an appropriate image generator for at least one, or each, of the divided images of the input image based on a result of an evaluation correlated with a user's subjective evaluation on a plurality of generated images preliminarily generated by the plurality of image generators from a plurality of images. By processing the images based on a plurality of (previous) user evaluations, this saves the user's labor for the images generated presently (and/or subsequently).

The information processing apparatus may comprise an evaluation means for calculating a result of an evaluation correlated with the user's subjective evaluation. The user's subjective evaluation may be based on an image obtained after a plurality of image processes (e.g., to which a weight correlated with the user's subjective evaluation is applied) are performed on the plurality of images and the plurality of generated images generated by the plurality of image generators from the plurality of images. By performing such an objective evaluation of the input image, this eliminates the need for the user to individually compare the divided images (e.g., corresponding to the generated images) with a reference image for learning based on the user's subjective evaluation. Hence, the user's work load can be reduced.

In this way, image discontinuity at the boundary portion between the adjacent generated images can be reduced such that the images are combined with a sense of unity.

The selection means may be configured to search divided images of the plurality of images for a divided image similar to a divided image of interest in the input image, and selects an image generator corresponding to the similar divided image as an appropriate image generator for the divided image of interest.

The selection means may be configured to determine a degree of similarity between the divided image of interest and the plurality of generated images generated by the plurality of image generators from the plurality of images using at least one feature amount of a spatial frequency characteristic, an average luminance value, and a contrast value of an image, and performs the search based on the degree of similarity.

The selection means may be configured to obtain the degree of similarity by converting the feature amount into a feature vector.

The combining means may be configured to combine the generated images corresponding to adjacent divided images, such that the generated images overlap each other with a predetermined width. Accordingly, image discontinuity can be further reduced by making unnatural seam joints less noticeable.

The combining means may be configured to combine the generated images by adjusting an average luminance value such that the generated images corresponding to the adjacent divided images have the same average luminance value.

The division means may be configured to divide (e.g., linearly) the input image, or at least a portion of the input image. For example, the division means may be configured to divide (e.g., linearly) the input image for each object in the input image.

The plurality of image generators may be configured to generate at least one, or each, of the generated images using at least one of: a learning model for noise removal processing, a learning model for super-resolution processing, a learning model for style conversion processing, and image filter processing.

Further features of the present invention will become apparent from the following description of example embodiments with reference to the attached drawings.

BRIEF DESCRIPTION OF THE DRAWINGS

Fig. 1 is a block diagram illustrating a functional configuration of an information processing system according to a first example embodiment.
Fig. 2 is a block diagram illustrating a hardware configuration example of a computer.
Fig. 3 is a schematic flowchart illustrating information processing according to the first example embodiment.
Fig. 4 is a flowchart illustrating reference data set creation processing according to the first example embodiment.
Fig. 5 is a flowchart illustrating image generation processing according to the first example embodiment.
Figs. 6A and 6B are diagrams used to explain combined image creation processing according to an example embodiment.
Figs. 7A and 7B are diagrams used to explain divided image combining processing.
Fig. 8 is a flowchart illustrating image generation processing according to a second example embodiment.

DESCRIPTION OF THE EMBODIMENTS

Hereinafter, example embodiments of the present disclosure will be described with reference to the drawings. The example embodiments described below do not limit the present invention, and all of the plurality of features described in the example embodiments are not necessarily essential to the solving means of the present disclosure, and the plurality of features may be arbitrarily combined. The configuration of the example embodiments can be appropriately modified or changed according to the specification and various conditions (use conditions, use environment, and the like) of the apparatus to which the disclosure is applied. Further, a part of each embodiment described below may be appropriately combined. In the following example embodiments, the same or similar configurations and processing steps are denoted by the same reference numerals, and redundant description thereof will be omitted.

A first example embodiment describes an example of information processing for generating an image with high image quality by inputting an image with low image quality to an image generator such as a machine learning model. Examples of the image with low image quality may include images containing high noise, blur, or the like. The first example embodiment describes an example of information processing for generating an image with high image quality by removing noise from a high-noise image.

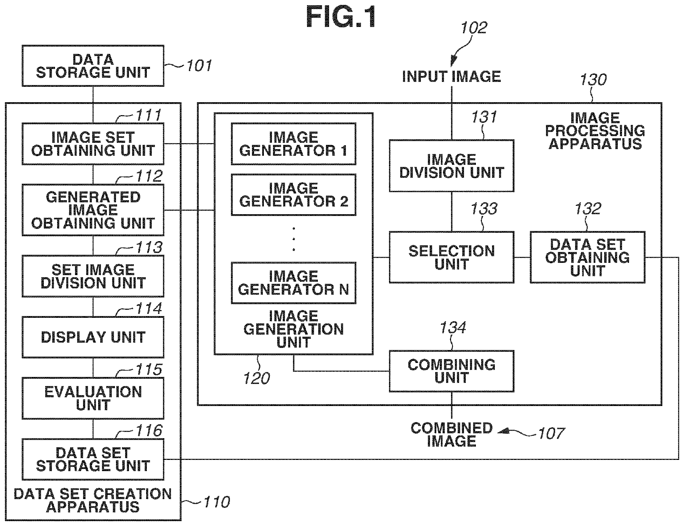

Fig. 1 illustrates an application example of an information processing apparatus according to the first example embodiment. Fig. 1 is a block diagram illustrating a configuration example of an information processing system including an image processing apparatus 130, a data set creation apparatus 110, and a data storage unit 101. The information processing apparatus according to the first example embodiment may include only the image processing apparatus 130, or may also include the data set creation apparatus 110 in addition to the image processing apparatus 130, or may further include the data storage unit 101.

The data storage unit 101 stores one or more image sets of a reference image for learning with low noise (or with no noise) and with high image quality and a low-image-quality image for learning that is a high-noise image and is an image of the same scene as that of the reference image for learning. Assume that the one or more image sets of the reference image for learning and the low-image-quality image for learning are prepared and stored in advance. The data storage unit 101 may be provided in an external apparatus such as a server (not illustrated), and may be present in a local environment as illustrated in Fig. 1.

The image processing apparatus 130 includes an image generation unit 120, and the image generation unit 120 is composed of a plurality of image generators 1 to N. Each of the image generators 1 to N included in the image generation unit 120 is composed of a machine learning model such as a neural network. Assume that a model that is preliminarily trained to generate an image with high image quality by removing noise from a high-noise image is used as the machine learning model. As the machine learning model, a convolutional neural network (CNN) model including a convolution layer, or a transformer model including an attention mechanism may be used. Also assume that the machine learning model is trained to obtain different image generation results by changing learning parameters or a breakdown of learning data to be used for learning. The image generators 1 to N are not limited to image generators using the machine learning model, but instead may be, for example, image generators for generating an image by removing noise from a high-noise image using image filter processing or the like. As image filters, for example, a plurality of Gaussian filters with different Gaussian $\sigma$ parameters may be used.

In the first example embodiment, assume that a model that is preliminarily trained to generate an image with high image quality by removing noise from a high-noise image is used as the machine learning model for each of the image generators 1 to N. Accordingly, even when the same image is input to the image generators 1 to N, the image generators 1 to N may generate images with different image qualities. An image generated by each of the image generators 1 to N in the image generation unit 120 is hereinafter referred to as a "generated image".

An image set obtaining unit 111 of the data set creation apparatus 110 obtains one or more image sets of the reference image for learning and the low-image-quality image for learning from the data storage unit 101.

After that, a generated image obtaining unit 112 inputs the low-image-quality image for learning included in the image set obtained by the image set obtaining unit 111 to each of the image generators 1 to N included in the image generation unit 120. Thus, the image generators 1 to N generate images obtained by removing noise from the low-image-quality image for learning as the high-noise image. However, as described above, the image generators 1 to N, which use machine learning models that are individually trained, may generate images with different image qualities from the same low-image-quality image for learning. Thus, the generated image obtaining unit 112 obtains a plurality of generated images generated by the image generators 1 to N.

A set image division unit 113 divides an input image into a plurality of areas. In the first example embodiment, the set image division unit 113 divides the reference image for learning and the low-image-quality image for learning, which are obtained by the image set obtaining unit 111, and the plurality of generated images, which is obtained by the generated image obtaining unit 112 from the image generators 1 to N, into a plurality of areas. As an image division method, a linear division method based on a rectangle or the like, or a non-linear division method based on an outline of each object within an image may be used. In the case of using the division method based on an outline of each object, for example, an object detector or a semantic segmentation method may be used to detect each object from an image, and the image may be divided based on the outline of the detected object. However, assume that the same division method is used for the reference image for learning, the low-image-quality image for learning, and the generated images of the same scene and the areas of these images are divided at corresponding positions.

A display unit 114 is composed of a liquid crystal display or the like, and displays the reference image for learning, the low-image-quality image for learning, and the plurality of generated images, which are divided into a plurality of areas by the set image division unit 113, so that a user can compare these images. As a display method that enables the user to compare the reference image for learning and the low-image-quality image for learning with the generated images, various known display methods, such as a display method in which these images are arranged, and a display method in which the images to be displayed are sequentially switched, may be used. In the first example embodiment, the image display on the display unit 114 is performed to evaluate the image quality of each of the generated images. Accordingly, the display of the low-image-quality image for learning may be omitted.

An evaluation unit 115 obtains, as an image quality evaluation result, for example, a result of comparison and evaluation of image qualities of the reference image for learning, the low-image-quality image for learning, and the plurality of generated images, which are displayed on the display unit 114, and stores the obtained image quality evaluation result. In the first example embodiment, the evaluation unit 115 obtains an image quality evaluation result based on a user's subjective evaluation in which the user observes the images displayed on the display unit 114 and compares the image qualities of the divided images, or a quantitative image quality evaluation result calculated by a calculator.

For example, in the case of performing the user's subjective evaluation, the user performs subjective comparison and evaluation processing, for example, by comparing the image qualities of divided images of the plurality of generated images with the reference image for learning. Accordingly, in this case, the evaluation unit 115 obtains the image quality comparison result based on the user's subjective comparison and evaluation.

For example, in the case of obtaining the quantitative image quality evaluation result calculated by a calculator, the evaluation unit 115 obtains the image quality evaluation result based on an objective evaluation method correlated with the user's subjective evaluation. In the case of using the objective evaluation method correlated with the user's subjective evaluation, the evaluation unit 115 calculates the objective evaluation result based on, for example, an image obtained after a plurality of image processes to which a weight correlated with the user's subjective evaluation is applied is performed on both the reference image for learning and the generated images. As a method for applying the weight correlated with the user's subjective evaluation, for example, a method of increasing a weight on an image process with a highest degree of matching with the subjective evaluation result can be used. The use of the objective evaluation method as described above eliminates the need for the user to perform an operation for comparing the divided images corresponding to the generated images with the reference image for learning based on the user's subjective evaluation, so that a work load on the user can be reduced.

A data set storage unit 116 stores a reference data set in which the divided images of the low-image-quality image for learning are correlated with the image generator used to generate the generated image with a highest image quality evaluation result in the divided images based on the image quality evaluation result obtained by the evaluation unit 115.

Each divided image of the low-image-quality image for learning that is included in the reference data set is hereinafter referred to as a "reference divided image".

The image processing apparatus 130 receives an input image 102 from an external apparatus and inputs the input image 102 to an image division unit 131. In the first example embodiment, assume that the input image 102 is a high-noise image.

The image division unit 131 divides the input image 102 into a plurality of areas by division processing similar to that used by the set image division unit 113 described above. The image division unit 131 according to the first example embodiment delivers the divided images obtained by dividing the input image 102 to a selection unit 133. Each divided image obtained by dividing the input image 102 is hereinafter referred to as an "input divided image".

A data set obtaining unit 132 obtains the reference data set that is created by the data set creation apparatus 110 and is stored in the data set storage unit 116. The data set obtaining unit 132 delivers the reference data set to the selection unit 133. As described above, the reference data set is information in which the reference divided images as the divided images of the low-image-quality image for learning are correlated with the image generator used to generate the generated image with the highest image quality evaluation result in the reference divided images.

The selection unit 133 selects an image generator in the image generation unit 120 for each input divided image based on the reference data set and the input image 102 that is divided into a plurality of input divided images by the image division unit 131. The selection unit 133 selects an image generator used to generate the generated image with the highest image quality evaluation result during creation of the reference data set for each input divided image based on the input divided images, the reference divided images in the reference data set, and the image quality evaluation result.

In the first example embodiment, the image generation unit 120 generates the generated images from the input divided images using the image generator corresponding to the input divided image selected by the selection unit 133, thereby obtaining the generated images corresponding to the respective input divided images.

A combining unit 134 combines two or more of the plurality of generated images generated by the image generators 1 to N in the image generation unit 120. As described above, the selection unit 133 selects the image generator used to generate the generated image with the highest image quality evaluation result in the reference data set. Accordingly, the combining unit 134 outputs a combined image with high image quality obtained by combining two or more generated images generated by the image generator with the highest image quality evaluation result.

<Hardware Configuration>

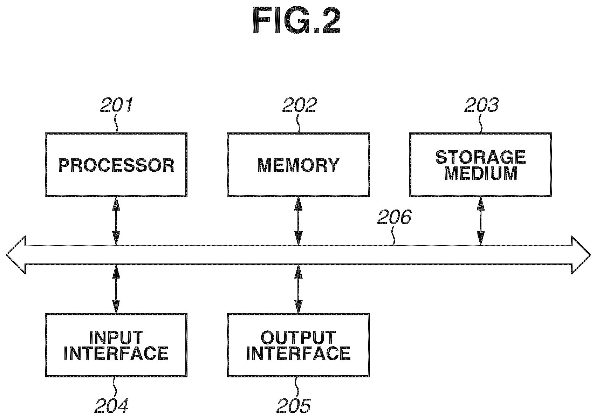

Fig. 2 is a block diagram illustrating a hardware configuration example of, for example, a computer that can implement the image processing apparatus 130 according to the first example embodiment. The data set creation apparatus 110 can also be implemented by a hardware configuration similar to the hardware configuration illustrated in Fig. 2. In addition, the image processing apparatus 130 and the data set creation apparatus 110 may be implemented by a single computer illustrated in Fig. 2. The hardware configuration illustrated in Fig. 2 can also be applied to an apparatus according to a second example embodiment to be described below.

In the configuration example illustrated in Fig. 2, a processor 201 is, for example, a central processing unit (CPU) and controls an overall operation of the computer. A memory 202 is, for example, a random access memory (RAM) and temporarily stores an information processing program according to the present example embodiment, image data, the reference data set, and the like. A storage medium 203 is a computer-readable storage medium and is, for example, a hard disk drive (HDD), a solid-state drive (SSD), or a compact disc (CD)-read only memory (ROM). The storage medium 203 stores various programs, including the information processing program according to the present example embodiment, data such as image data, the reference data set, and the reference image for learning and the low-image-quality image for learning stored in the data storage unit 101, and the like for a long period of time. The information processing program according to the present example embodiment stored in the storage medium 203 is loaded into the memory 202, and the processor 201 executes the information processing program to thereby implement each functional unit illustrated in Fig. 1.

An input interface 204 is an interface for obtaining information from an external apparatus. The input interface 204 is connected to a mouse, a keyboard, and the like used for the user to input instructions and the like. An output interface 205 is an interface for outputting information to an external apparatus. The output interface 205 is connected to a liquid crystal display, an organic electroluminescence (EL) display, or the like for the display unit 114. For example, the output interface 205 outputs image display data and the like used for the user's subjective evaluation. A bus 206 connects the above-described units so that the units can exchange data.

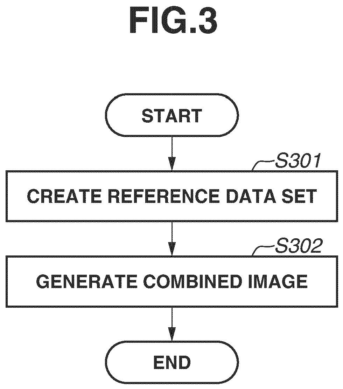

Fig. 3 is a flowchart illustrating a flow of overall processing in the information processing system according to the first example embodiment illustrated in Fig. 1.

First, as processing of step S301, the data set creation apparatus 110 creates a reference data set using image sets stored in the data storage unit 101.

Next, as processing of step S302, the image processing apparatus 130 generates a combined image with high image quality by removing noise from the high-noise input image 102 based on the reference data set created by the data set creation apparatus 110.

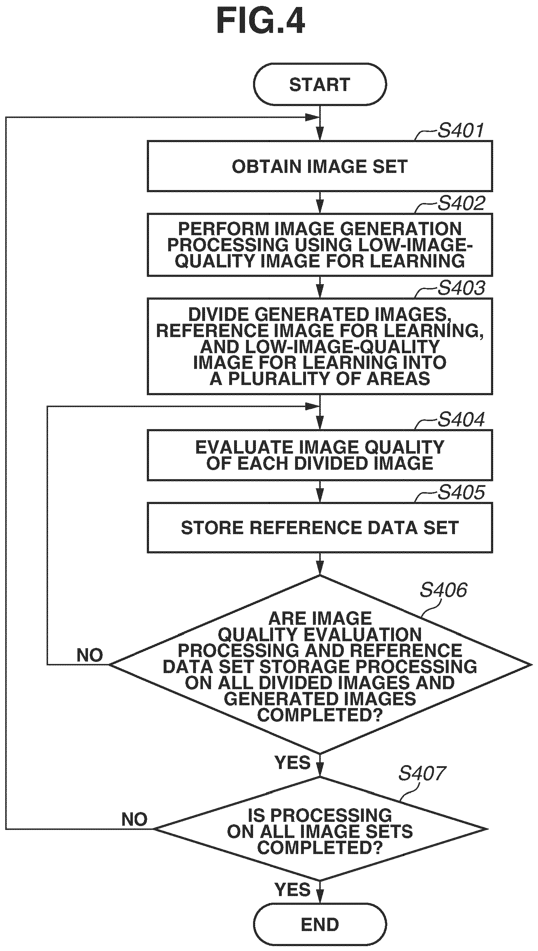

Fig. 4 is a flowchart illustrating a detailed flow of reference data set creation processing performed by the data set creation apparatus 110 in step S301 illustrated in Fig. 3.

First, as processing of step S401, the image set obtaining unit 111 obtains a set of the reference image for learning and the low-image-quality image for learning of the same scene from the data storage unit 101.

Next, as processing of step S402, the generated image obtaining unit 112 inputs the low-image-quality image for learning to each of the image generators 1 to N in the image generation unit 120, and obtains the generated images generated by the image generators 1 to N. Since the image generators 1 to N use machine learning models that are individually trained in advance as described above, the image generators 1 to N can generate images with different image qualities. While the first example embodiment illustrates an example where the low-image-quality image for learning is input to each of the image generators 1 to N, the first example embodiment is not limited to this example. The low-image-quality image for learning may be input to at least two (that is, two or more) image generators.

Next, as processing of step S403, the set image division unit 113 divides the plurality of generated images generated by the image generators 1 to N based on the low-image-quality image for learning and the reference image for learning and the low-image-quality image for learning obtained by the image set obtaining unit 111 into a plurality of areas.

Next, as processing of step S404, the display unit 114 displays the plurality of generated images and the reference image for learning so that the user can compare these images. In this case, the user compares the plurality of generated images and the reference image for learning for each divided image at the corresponding position, and selects the image generator used to generate the generated image with the highest image quality. The display unit 114 may display images only when the user's subjective image quality evaluation is performed. If the above-described objective evaluation method is used, the image display by the display unit 114 may be omitted. Further, the evaluation unit 115 obtains the result of the image quality evaluation performed on each of the divided images corresponding to the plurality of generated images and the reference image for learning.

Next, as processing of step S405, the data set storage unit 116 stores, as the reference data set, a set of divided images of the low-image-quality image for learning on which the image quality evaluation is performed in step S404 and information indicating the selected image generators corresponding to the divided images, respectively.

Next, as processing of step S406, the data set creation apparatus 110 determines whether the image quality evaluation processing of step S404 and the reference data set storage processing of step S405 on all divided images and all generated images are completed. If there are divided images on which the processing has not been performed, the data set creation apparatus 110 performs the processing of steps S404 and S405 on the divided images on which the processing has not been performed. On the other hand, if the processing is completed (YES in step S406), the processing proceeds to step S407. Even in a case where the image quality evaluation processing of step S404 and the reference data set storage processing of step S405 on all divided images and all generated images are not completed, if the other divided images are similar to each other and similar evaluation results are continuously obtained (e.g., the set of the reference image for learning and the low-image-quality image for learning obtained from the data storage unit 101 indicates images of a uniform scene such as the sky, sea, or the like), the processing may proceed to step S407 based on a user's determination so as to save user's labor for evaluation.

In step S407, the data set creation apparatus 110 checks whether processing of steps S401 to S406 on all image sets used to create the reference data set is completed. All image sets used to create the reference data set indicate a set of all reference images for learning and low-image-quality images for learning stored in the data storage unit 101, or one or more sets of a preset number of reference images for learning and low-image-quality images for learning set by the user. If there are sets of the reference images for learning and the low-image-quality images for learning on which the image quality evaluation processing has not been performed, the data set creation apparatus 110 changes the sets of the reference images for learning and the low-image-quality images for learning, and repeatedly performs the processing of steps S401 to S406.

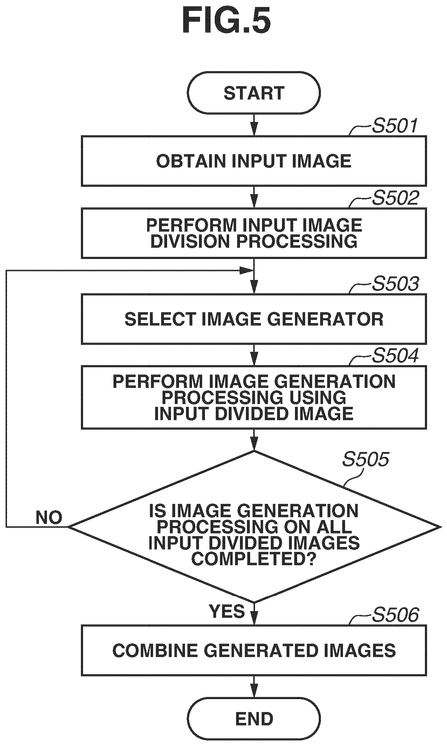

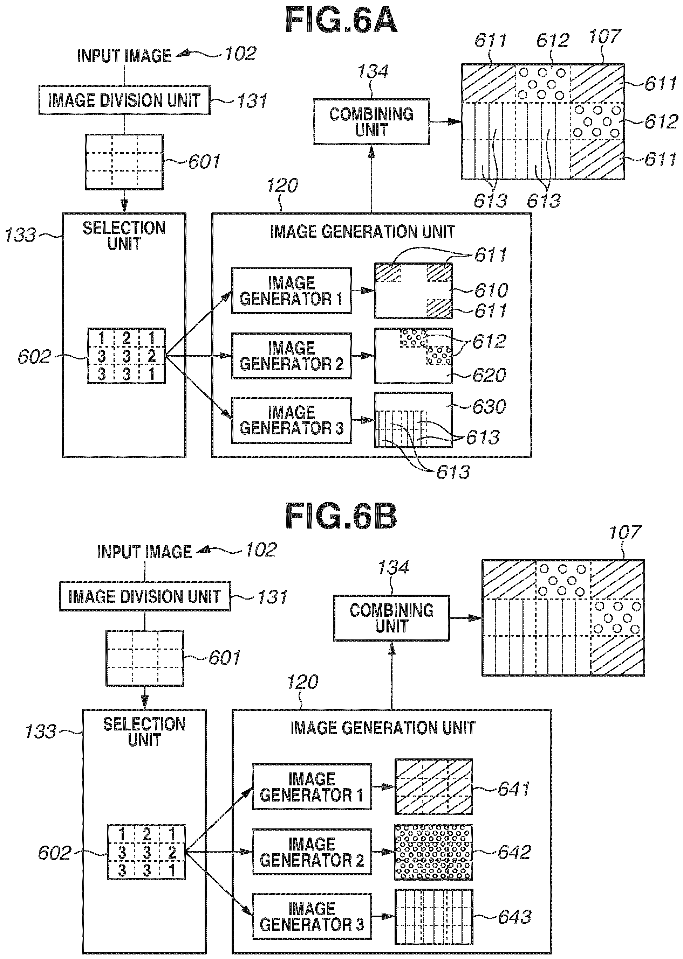

Fig. 5 is a flowchart illustrating a detailed flow of image generation processing performed by the image processing apparatus 130 in step S302 illustrated in Fig. 3. Fig. 6A is used to explain processing to be performed by the image processing apparatus 130.

First, as processing of step S501, the image processing apparatus 130 obtains the input image 102 as a high-noise image.

Next, as processing of step S502, the image division unit 131 divides the input image 102 into a plurality of areas.

An image 601 illustrated in Fig. 6A is an example of an image obtained by dividing the input image 102 into nine input divided images, including three vertically divided images and three horizontally divided images, by the image division unit 131.

Next, as processing of step S503, the data set obtaining unit 132 obtains the reference data set from the data set storage unit 116 of the data set creation apparatus 110. Further, in step S503, the selection unit 133 selects one image generator to be used for each input divided image based on the input divided images divided by the image division unit 131 in step S502 and the reference data set.

In the present example embodiment, the selection unit 133 sets one of the plurality of input divided images divided by the image division unit 131 as a divided image of interest, and searches the reference divided images of the low-image-quality image for learning in the reference data set for a reference divided image similar to the divided image of interest.

In this case, the selection unit 133 compares a feature amount of the divided image of interest with a feature amount of all reference divided images within the reference data set, and identifies the reference divided image with a highest degree of similarity to the feature amount of the divided image of interest among all reference divided images. Further, the selection unit 133 selects the image generator corresponding to the identified reference divided image as the image generator corresponding to the divided image of interest from among the image generators correlated with the reference divided images, in the reference data set.

As the feature amount calculated from each of the input divided images and reference divided images, for example, a spatial frequency characteristic value, an average luminance value, or a contrast value in the divided images can be used. To determine the degree of similarity between feature amounts, for example, an index such as a cosine similarity or an Euclidean distance can be used. For example, assume a case where the degree of similarity is determined using cosine similarity. The cosine similarity is defined by the following expression (1).

$$\cos(x,y) = \frac{x \cdot y}{\|x\| \cdot \|y\|} = \frac{x_1 y_1 + x_2 y_2 + \cdots + x_n y_n}{\sqrt{|x_1|^2 + |x_2|^2 + \cdots + |x_n|^2}\sqrt{|y_1|^2 + |y_2|^2 + \cdots + |y_n|^2}}$$

$$(1)$$

For example, assume that a feature amount of a divided area of interest is represented by an n-dimensional feature vector $x = (x_1, x_2, \cdots, x_n)$ and a feature amount of a reference divided image is represented by an n-dimensional feature vector $y = (y_1, y_2, \cdots, y_n)$. The cosine similarity is calculated by substituting values "x" and "y" into Expression (1) described above. As the feature vectors, at least one of a pixel value, a brightness value, a saturation value, and a luminance value is stored. The cosine similarity takes a value (maximum value is "1") that increases as the degree of similarity between the feature vectors in two divided images at the corresponding position increases. In other words, as the value of the cosine similarity increases, the degree of similarity between the two corresponding divided images increases. That is, the selection unit 133 identifies the searched reference divided image with the cosine similarity between the divided image of interest and the reference divided image being closest to "1 ".

Further, the selection unit 133 selects the image generator correlated with the identified reference divided image in the reference data set as the image generator corresponding to the divided image of interest, that is, an appropriate (optimum) image generator for performing noise removal processing on the divided image of interest.

Fig. 6A illustrates an example where any one of the image generators 1 to 3 is selected for each of nine input divided images illustrated in an image 602. Specifically, among the input divided images of the image 602 in the example illustrated in Fig. 6A, "1" is set in the input divided image selected by the image generator 1, "2" is set in the input divided image selected by the image generator 2, and "3" is set in the input divided image selected by the image generator 3.

Next, as processing of step S504, the image generation unit 120 performs processing for generating an image in which noise is removed by the image generator selected by the selection unit 133 using the input divided image.

Fig. 6A illustrates an example where the generated image in which noise is removed by the image generator is located at a position corresponding to the position of each input divided image of the original input image 102. Specifically, in the example illustrated in Fig. 6A, a layout 610 indicates positions of generated images 611 that are generated by the image generator 1. A layout 620 indicates positions of generated images 612 that are generated by the image generator 2, and a layout 630 indicates positions of generated images 613 that are generated by the image generator 3.

Next, as processing of step S505, the image generation unit 120 determines whether the image generation processing (processing of generating an image in which noise is removed) on all input divided images obtained by dividing the input image 102 by the image division unit 131 is completed. If it is determined that the image generation processing on all input divided images is not completed (NO in step S505), the processing of the image processing apparatus 130 returns to step S503. In step S503, the selection unit 133 sets the input divided image on which the image generation processing has not been performed as the divided image of interest, and selects one image generator to be used for the divided image of interest by the image generation unit 120. Next, in step 504, the image generation unit 120 performs image generation processing in the same manner as described above. Thus, the processing of steps S503 and S504 is repeatedly performed until the image generation unit 120 determines that the image generation processing on all input divided images is completed in step S505.

On the other hand, if the image generation processing on all input divided images is completed (YES in step S505), the processing of the image processing apparatus 130 proceeds to step S506. In step S506, the combining unit 134 performs generated image combining processing.

Fig. 6A illustrates an example of a combined image 107 that is obtained by combining the generated images generated by the image generation unit 120. As illustrated in Fig. 6A, the combined image 107 is an image obtained by combining the generated images 611 generated by the image generator 1, the generated images 612 generated by the image generator 2, and the generated images 613 generated by the image generator 3. In other words, in the case of combining the generated images generated for each input divided image, the combining unit 134 combines the generated images by arranging the generated images such that the positions of the generated images correspond to the positions of the input divided images of the original input image 102.

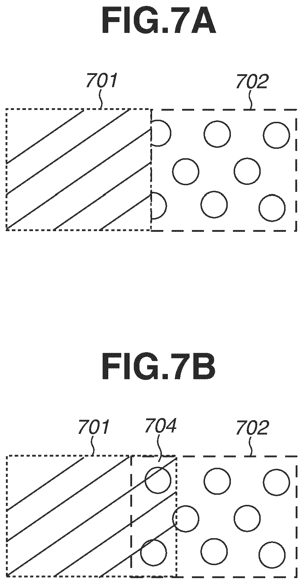

In the case of combining the generated images for each input divided image, the adjacent generated images are combined. Fig. 7A schematically illustrates two adjacent generated images 701 and 702. However, if the two adjacent two generated images 701 and 702 are simply combined together, an image discontinuity or an unnatural seam joint may appear at a boundary portion between the generated images 701 and 702.

In the present example embodiment, as a method for reducing the image discontinuity during generated image combining processing, or making an unnatural seam joints less noticeable, for example, the following method can be used. For example, in the case of dividing the input image 102, the image division unit 131 divides the input image 102 in such a manner that boundary portions of the input divided images overlap each other with a predetermined width. Further, in the case of combining the generated images generated for each input divided image, the combining unit 134 combines the generated images after applying a weight to an overlapping area 704 of the predetermined width between the adjacent generated images 701 and 702 as illustrated in Fig. 7B. This makes it possible to reduce (eliminates) the image discontinuity at the boundary portion between the adjacent generated images.

In the present example embodiment, the combined image is an image obtained by combining the generated images generated by different image generators, in the image generation unit 120. Accordingly, the sense of unity in the combined image may be lost.

In the present example embodiment, as a method for generating a combined image with a sense of unity, for example, any one of the following methods, or a combination of two or more of the following methods can be used. For example, the combining unit 134 combines adjacent generated images in such a manner that the adjacent generated images have the same average luminance value. Specifically, the combining unit 134 adds or subtracts a bias to or from the luminance value in each pixel within one of the generated images so that the average luminance value in the one generated image matches the average luminance value in the other of the generated images. Alternatively, the combining unit 134 may perform luminance adjustment processing on both the adjacent generated images. In addition, for example, the combining unit 134 may adjust the luminance value in such a manner that the average luminance value in the overlapping area 704 of the predetermined width in one of the adjacent generated images 701 and 702 matches the average luminance value in the overlapping area 704 of the predetermined width in the other of the adjacent generated images 701 and 702 described above with reference to Fig. 7B. Further, for example, the image division unit 131 may obtain the average luminance value for the input image 102 and the combining unit 134 may adjust the average luminance value in the combined image to match the average luminance value in the input image 102. In the present example embodiment, a combined image with a sense of unity can be obtained by any one of the above-described methods, or by a combination of two or more of the above-described methods.

As described above, in the information processing system according to the first example embodiment, the data set creation apparatus 110 creates a reference data set using an appropriate (optimum) image generator selected for each divided image through a user's subjective evaluation or an objective evaluation, and holds the created reference data set. The image processing apparatus 130 generates an image with high image quality by removing noise from the high-noise input image 102 based on the reference data set. In the first example embodiment, the image processing apparatus 130 selects the appropriate image generator based on the reference data set for each of the input divided images obtained by dividing the input image 102. Further, the image processing apparatus 130 combines the generated images generated from the input divided images using the appropriate image generator selected for each input divided image, thereby generating a combined image with high image quality. According to the first example embodiment, it is possible to provide an image with higher image quality than an image obtained by combining generated images generated using each image generator singly. In particular, if the data set creation apparatus 110 creates a reference data set based on, for example, a user's subjective evaluation result, the image processing apparatus 130 can generate an image with high image quality based on a user's personal preference from a high-noise input image. According to the first example embodiment, an image obtained by removing noise is generated for each small divided image obtained by dividing the input image 102, which leads to a reduction in the calculation amount as compared with a case where an image in which noise is removed is generated directly from the input image 102 that is not divided. Consequently, an image with high image quality in which noise is finally removed can be generated also in an information processing apparatus that is not configured to perform a large number of calculations at once.

Next, the second example embodiment will be described. The configuration according to the second example embodiment is substantially the same as the configuration according to the first example embodiment illustrated in Figs. 1 and 2. Accordingly, the illustration and detailed descriptions of the configuration according to the second example embodiment are omitted. The second example embodiment also illustrates an example where a combined image with high image quality is generated by removing noise from the high-noise input image 102. The second example embodiment mainly differs from the first example embodiment in regard to the image generation processing in the plurality of image generators 1 to N of the image generation unit 120 and the image combining processing using the generated images generated by the image generators 1 to N. The differences between the second example embodiment and the first example embodiment will be mainly described below.

In the second example embodiment, the selection unit 133 selects the image generators 1 to N in the image generation unit 120 so that images obtained by removing noise from all divided images of the input image 102 can be generated. Specifically, in the second example embodiment, image generation processing for generating images by removing noise from all input divided images of the input image 102 is performed for each of the image generators 1 to N. Also, in the second example embodiment, the image generator with a highest image quality evaluation result in the reference data set is selected for each input divided image by a search based on the feature amount of an image, like in the first example embodiment. Then, information indicating the image generator selected for each input divided image is sent to the combining unit 134 through the image generation unit 120.

The combining unit 134 according to the second example embodiment extracts the divided image corresponding to the image generator selected for each input divided image from the generated images generated by removing noise from all input divided images by each of the image generators 1 to N, and combines the extracted divided images. Thus, also in the second example embodiment, the combining unit 134 outputs a combined image with high image quality obtained by combining two or more of the generated images generated by the image generator with the highest image quality evaluation result for each input divided image.

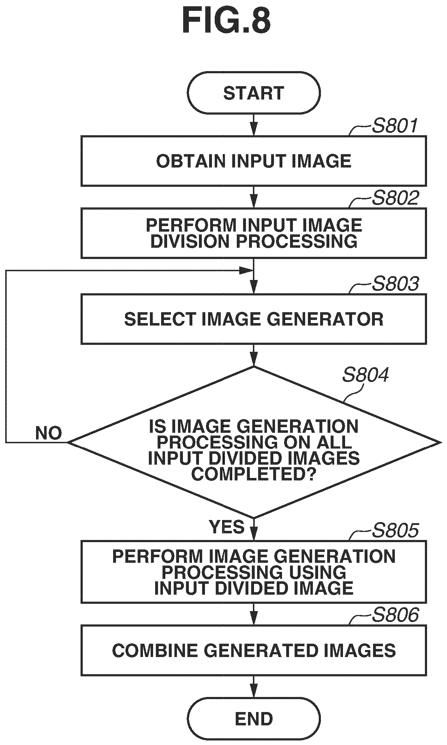

Fig. 8 is a flowchart illustrating a detailed flow of image generation processing performed by the image processing apparatus 130 in step S302 illustrated in Fig. 3 according to the second example embodiment. In the flowchart illustrated in Fig. 8, processes of steps S801 and S802 are similar to the processes of steps S501 and S502, respectively, in the flowchart illustrated in Fig. 5, and thus the descriptions thereof are omitted. Fig. 6B is used to explain processing to be performed by the image processing apparatus 130 according to the second example embodiment.

According to the second example embodiment, in step S803, the selection unit 133 sequentially selects, for example, the image generators 1 to N in the image generation unit 120 so that image generation processing for generating images by removing noise from all input divided images of the input image 102 is performed. In the second example embodiment, after the processing of step S803, the processing of the image processing apparatus 130 proceeds to step S804.

In step S804, the image generation unit 120 determines whether the image generation processing on all input divided images in each of the image generators 1 to N is completed. If it is determined that the image generation processing on all input divided images in each of the image generators 1 to N is not completed (NO in step S804), the processing of the image processing apparatus 130 returns to step S803. In step S803, the selection unit 133 selects an image generator on which the image generation processing has not been performed. Thus, in the second example embodiment, the processing of step S803 is repeatedly performed until the image generation unit 120 determines that the image generation processing on all input divided images in each of the image generators 1 to N is completed in step S804.

On the other hand, if it is determined that the image generation processing in each of the image generators 1 to N is completed (YES in step S804), the processing of the image processing apparatus 130 proceeds to step S805.

In step S805, the combining unit 134 performs processing for extracting the generated images generated from the input divided images by the image generator with the highest image quality evaluation result in the reference data set from the generated images generated by each of the image generators 1 to N, and combining the extracted generated images.

Fig. 6B illustrates an example where the combined image 107 is generated by combining generated images selected for each input divided image from among the generated images generated by the image generation unit 120. As illustrated in Fig. 6A, the image generation unit 120 generates the generated images from all the input divided images in each of the image generators 1 to N. Also, in the example illustrated in Fig. 6B, the image 602 is obtained by dividing the input image 102 into nine input divided images, like in the example illustrated in Fig. 6A. The number set in each input divided image of the image 602 illustrated in Fig. 6B corresponds to the number corresponding to the image generator with the highest image quality evaluation result among the image generators 1 to N in the reference data set. Also, in the example illustrated in Fig. 6B, assume that the image generators 1 to 3 have the highest image quality evaluation result for the nine input divided images illustrated in the image 602.

In the second example embodiment, the image generation unit 120 performs image generation processing on all input divided images of the image 602 in each of the image generators 1 to N. In the example illustrated in Fig. 6B, assume that an image 641 is a generated image generated by the image generator 1, an image 642 is a generated image generated by the image generator 2, and an image 643 is a generated image generated by the image generator 3.

In the second example embodiment, the combining unit 134 extracts the generated images generated from the input divided images by the image generators with the highest image quality evaluation result in each reference data set from the image 641, the image 642, and the image 643. Further, the combining unit 134 combines the generated images generated from the input divided images by the image generators with the highest image quality evaluation result in the reference data set by arranging the generated images at positions corresponding to the input divided images, thereby generating the combined image 107. Also, in the second example embodiment, a combined image with a sense of unity may be generated by reducing the image discontinuity at the boundary portion between the adjacent generated images by a method similar to that used in the first example embodiment.

As described above, the image processing apparatus 130 according to the second example embodiment can also generate a combined image with high image quality by removing noise from the high-noise input image 102. Also, in the second example embodiment, like in the first example embodiment, it is possible to provide an image with higher image quality than an image obtained by combining generated images generated using each image generator singly. Also, in the second example embodiment, if the reference data set is created based on the user's subjective evaluation result, the image processing apparatus 130 can generate an image with high image quality based on the user's personal preference.

While the first and second example embodiments described above illustrate an example where an image is generated by removing noise from a high-noise image, the image generation processing is not limited to noise removal processing. Examples of the image generation processing may include super-resolution processing for generating an image with high resolution from an input image with low resolution. Other examples of the image generation processing may include style conversion processing on an input image (e.g., processing for converting a color image into a monochrome image). In other words, the plurality of image generators 1 to N is not limited to image generators using a machine learning model for performing noise removal processing as described above, but instead may be image generators using a machine learning model for performing super-resolution processing or style conversion processing. The plurality of image generators 1 to N is not limited to image generators using a machine learning model, but instead may be, for example, image generators for generating images by image filter processing.

<Other Example Embodiments>

The present disclosure can also be implemented by processing in which a program for implementing one or more functions of the above-described example embodiments is supplied to a system or an apparatus via a network or a storage medium, and one or more processors in a computer of the system or the apparatus read and execute the program, or by a circuit (for example, an application specific integrated circuit (ASIC)) for implementing one or more functions.

The above-described example embodiments are merely examples of embodiments for carrying out the present disclosure, and the technical scope of the present disclosure should not be interpreted in a limited manner by these example embodiments. That is, the present disclosure can be implemented in various forms without departing from the technical idea or the main features thereof.

According to an aspect of the present disclosure, it is possible to generate an image with a desired image quality.

Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present disclosure has been described with reference to example embodiments, it is to be understood that the disclosure is not limited to the disclosed example embodiments. The scope of the following claims encompasses all such modifications and equivalent structures and functions.

**Claims**

1.  An information processing apparatus (130) comprising:

    a division means (131) for dividing an input image (102) into a plurality of divided images;
    a selection means (133) for selecting an appropriate image generator for each of the divided images from among a plurality of image generators based on the divided images of the input image;
    an image generation means (120) for generating a plurality of generated images from the divided images of the input image using the plurality of image generators selected by the selection means; and
    a combining means for combining two or more of the generated images.

2.  The information processing apparatus according to claim 1, wherein the image generation means generates the generated images from the divided images using the image generators selected for the divided images by the selection means, and
    wherein the combining means combines the plurality of generated images generated for the divided images by arranging the generated images at positions corresponding to the divided images of the input image.

3.  The information processing apparatus according to claim 1, wherein the image generation means generates the plurality of generated images from the input image using the plurality of image generators selected for the divided images and
    wherein the combining means extracts area images generated by the appropriate image generator selected for each of the divided images from among the plurality of generated images generated from the input image, and combines the area images by arranging the area images at positions corresponding to the divided images of the input image.

4.  The information processing apparatus according to claim 1, wherein the selection means selects the appropriate image generator for each of the divided images of the input image based on a result of a user's subjective evaluation performed on a plurality of generated images preliminarily generated by the plurality of image generators from a plurality of images.

5.  The information processing apparatus according to claim 1, wherein the selection means selects the appropriate image generator for each of the divided images of the input image based on a result of an evaluation correlated with a user's subjective evaluation on a plurality of generated images preliminarily generated by the plurality of image generators from a plurality of images.

6.  The information processing apparatus according to claim 5, further comprising an evaluation means for calculating a result of an evaluation correlated with the user's subjective evaluation based on an image obtained after a plurality of image processes, to which a weight correlated with the user's subjective evaluation is applied, is performed on the plurality of images and the plurality of generated images generated by the plurality of image generators from the plurality of images.

7.  The information processing apparatus according to claim 4, wherein the selection means searches divided images of the plurality of images for a divided image similar to a divided image of interest in the input image, and selects an image generator corresponding to the similar divided image as an appropriate image generator for the divided image of interest.

8.  The information processing apparatus according to claim 7, wherein the selection means determines a degree of similarity between the divided image of interest and the plurality of generated images generated by the plurality of image generators from the plurality of images using at least one feature amount of a spatial frequency characteristic, an average luminance value, and a contrast value of an image, and performs the search based on the degree of similarity.

9.  The information processing apparatus according to claim 8, wherein the selection means obtains the degree of similarity by converting the feature amount into a feature vector.

10. The information processing apparatus according to any one of the preceding claims, wherein the combining means combines the generated images corresponding to adjacent divided images, such that the generated images overlap each other with a predetermined width.

**11.** The information processing apparatus according to any one of the preceding claims, wherein the combining means combines the generated images by adjusting an average luminance value such that the generated images corresponding to the adjacent divided images have the same average luminance value.

**12.** The information processing apparatus according to any one of the preceding claims, wherein the division means linearly divides the input image, or linearly divides the input image for each object in the input image.

**13.** The information processing apparatus according to claim 1, wherein the plurality of image generators generate the generated images using at least one of a learning model for noise removal processing, a learning model for super-resolution processing, a learning model for style conversion processing, and image filter processing.

**14.** An information processing method comprising:

dividing an input image into a plurality of divided images;
selecting an appropriate image generator for each of the divided images from among a plurality of image generators based on the divided images of the input image;
generating a plurality of generated images from the divided images of the input image using the plurality of selected image generators; and
combining two or more of the generated images.

**15.** A non-transitory computer-readable storage medium storing a computer-executable program for causing a computer to perform the method according to claim 14.

# FIG.1

DATA STORAGE UNIT ~101

102

INPUT IMAGE

130

IMAGE PROCESSING APPARATUS

~111
IMAGE SET OBTAINING UNIT

~112
GENERATED IMAGE OBTAINING UNIT

~113
SET IMAGE DIVISION UNIT

~114
DISPLAY UNIT

~115
EVALUATION UNIT

~116
DATA SET STORAGE UNIT

DATA SET CREATION APPARATUS ~110

IMAGE GENERATOR 1

IMAGE GENERATOR 2

IMAGE GENERATOR N

IMAGE GENERATION UNIT

120

131
IMAGE DIVISION UNIT

133
SELECTION UNIT

132
DATA SET OBTAINING UNIT

134
COMBINING UNIT

COMBINED IMAGE ~107

# FIG.2

PROCESSOR 201

MEMORY 202

STORAGE MEDIUM 203

206

INPUT INTERFACE 204

OUTPUT INTERFACE 205

# FIG.3

START

S301

CREATE REFERENCE DATA SET

S302

GENERATE COMBINED IMAGE

END

# FIG.4

START

S401

OBTAIN IMAGE SET

S402

PERFORM IMAGE GENERATION
PROCESSING USING LOW-IMAGE-
QUALITY IMAGE FOR LEARNING

S403

DIVIDE GENERATED IMAGES,
REFERENCE IMAGE FOR LEARNING,
AND LOW-IMAGE-QUALITY
IMAGE FOR LEARNING INTO
A PLURALITY OF AREAS

S404

EVALUATE IMAGE QUALITY
OF EACH DIVIDED IMAGE

S405

STORE REFERENCE DATA SET

S406

ARE IMAGE
QUALITY EVALUATION
PROCESSING AND REFERENCE
DATA SET STORAGE PROCESSING
ON ALL DIVIDED IMAGES AND
GENERATED IMAGES
COMPLETED?

NO

YES

S407

IS PROCESSING
ON ALL IMAGE SETS
COMPLETED?

NO

YES

END

# FIG.5

```
          ┌─────────────┐
          │    START    │
          └──────┬──────┘
                 │               ┌─S501
          ┌──────▼──────────────┐
          │  OBTAIN INPUT IMAGE │
          └──────┬──────────────┘
                 │               ┌─S502
          ┌──────▼──────────────┐
          │ PERFORM INPUT IMAGE │
          │ DIVISION PROCESSING │
          └──────┬──────────────┘
                 │               ┌─S503
          ┌──────▼──────────────┐
          │ SELECT IMAGE        │
          │ GENERATOR           │
          └──────┬──────────────┘
                 │               ┌─S504
          ┌──────▼──────────────┐
          │ PERFORM IMAGE       │
          │ GENERATION          │
          │ PROCESSING USING    │
          │ INPUT DIVIDED IMAGE │
          └──────┬──────────────┘
                 │            S505
              ◇  ▼
     NO   IS IMAGE GENERATION
          PROCESSING ON ALL
          INPUT DIVIDED IMAGES
          COMPLETED?
              YES │             ┌─S506
          ┌───────▼─────────────┐
          │ COMBINE GENERATED   │
          │ IMAGES              │
          └───────┬─────────────┘
                  │
          ┌───────▼─────┐
          │     END     │
          └─────────────┘
```

# FIG.6A

INPUT IMAGE ◄— 102

IMAGE DIVISION UNIT ─131

┌─┬─┐
│ │ │ ─601
└─┴─┘

133 ─ **SELECTION UNIT**

602 ─
┌───┬───┬───┐
│ 1 │ 2 │ 1 │
├───┼───┼───┤
│ 3 │ 3 │ 2 │
├───┼───┼───┤
│ 3 │ 3 │ 1 │
└───┴───┴───┘

120

**IMAGE GENERATION UNIT**

IMAGE GENERATOR 1 ─── 611, 610, 611

IMAGE GENERATOR 2 ─── 612, 620

IMAGE GENERATOR 3 ─── 630, 613, 613

134

COMBINING UNIT

611  612  107
611
612
611
613  613

# FIG.6B

INPUT IMAGE ◄— 102

IMAGE DIVISION UNIT ─131

┌─┬─┐
│ │ │ ─601
└─┴─┘

133 ─ **SELECTION UNIT**

602 ─
┌───┬───┬───┐
│ 1 │ 2 │ 1 │
├───┼───┼───┤
│ 3 │ 3 │ 2 │
├───┼───┼───┤
│ 3 │ 3 │ 1 │
└───┴───┴───┘

120

**IMAGE GENERATION UNIT**

IMAGE GENERATOR 1 ─── 641

IMAGE GENERATOR 2 ─── 642

IMAGE GENERATOR 3 ─── 643

134

COMBINING UNIT

107

19

# FIG.7A

701    702

# FIG.7B

701    704    702

# FIG.8

```
           ┌─────────────┐
           │    START    │
           └──────┬──────┘
                  │              ╭─S801
         ┌────────▼────────────┐
         │  OBTAIN INPUT IMAGE │
         └────────┬────────────┘
                  │              ╭─S802
         ┌────────▼────────────┐
         │  PERFORM INPUT IMAGE│
         │  DIVISION PROCESSING│
         └────────┬────────────┘
                  │              ╭─S803
         ┌────────▼────────────┐
         │ SELECT IMAGE        │
         │ GENERATOR           │
         └────────┬────────────┘
                  │        S804
                  ▼
              ╱───────────╲
        NO   ╱ IS IMAGE     ╲
        ◄───┤  GENERATION    ├
            ╲  PROCESSING ON ╱
             ╲ ALL INPUT    ╱
              ╲ DIVIDED    ╱
               ╲ IMAGES   ╱
                ╲COMPLETED?╱
                 ╲───────╱
                YES │        ╭─S805
         ┌──────────▼──────────┐
         │ PERFORM IMAGE       │
         │ GENERATION          │
         │ PROCESSING USING    │
         │ INPUT DIVIDED IMAGE │
         └──────────┬──────────┘
                    │        ╭─S806
         ┌──────────▼──────────┐
         │ COMBINE GENERATED   │
         │ IMAGES              │
         └──────────┬──────────┘
                    │
              ┌─────▼─────┐
              │    END    │
              └───────────┘
```

Europäisches
Patentamt

European
Patent Office

Office européen
des brevets

## EUROPEAN SEARCH REPORT

**Application Number**

EP 24 22 1232

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 11 100 638 B2 (HITACHI LTD [JP])<br>24 August 2021 (2021-08-24)<br>* abstract *<br>* column 5, line 57 - column 6, line 44 *<br>* column 7, line 55 - column 8, line 32 *<br>* figures 2, 3, 6, 7 *<br>----- | 1,2,<br>10-15<br>4-9 | INV.<br>G06T3/4053<br>G06T5/60<br>G06T11/00 |
| X,D<br><br>A | US 2021/407048 A1 (TANAKA CHIZUE [JP] ET AL) 30 December 2021 (2021-12-30)<br>* abstract *<br>* paragraph [0024] - paragraph [0028] *<br>* paragraph [0034] - paragraph [0040] *<br>* figures 2, 5 *<br>----- | 1,3,10,<br>11,13-15<br>4-9 | |
| X | ZHAO LUXI ET AL: "Learning Tone Curves for Local Image Enhancement",<br>IEEE ACCESS,<br>vol. 10, 19 March 2022 (2022-03-19), pages 60099-60113, XP093059113,<br>DOI: 10.1109/ACCESS.2022.3178745<br>* abstract *<br>* section III, introductory passage *<br>* sections III.A, III.B *<br>* figure 2 *<br>----- | 1,14,15 | |
| A | SING BING KANG ET AL: "Personalization of image enhancement",<br>2010 IEEE CONFERENCE ON COMPUTER VISION AND PATTERN RECOGNITION (CVPR), 13-18 JUNE 2010, SAN FRANCISCO, CA, USA, IEEE, PISCATAWAY, NJ, USA,<br>13 June 2010 (2010-06-13), pages 1799-1806, XP031725680,<br>ISBN: 978-1-4244-6984-0<br>* abstract *<br>* section 3 *<br>* figure 1 *<br>----- | 4-9 | |

**TECHNICAL FIELDS
SEARCHED (IPC)**

G06T

The present search report has been drawn up for all claims

| Place of search | Date of completion of the search | Examiner |
|---|---|---|
| Munich | 22 April 2025 | Engels, Angela |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 22 1232

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2025

| Patent document cited in search report | | Publication date | Patent family member(s) | | Publication date |
|---|---|---|---|---|---|
| US 11100638 | B2 | 24-08-2021 | JP | 6772112 B2 | 21-10-2020 |
| | | | JP | 2019025044 A | 21-02-2019 |
| | | | US | 2020175675 A1 | 04-06-2020 |
| | | | WO | 2019026407 A1 | 07-02-2019 |
| US 2021407048 | A1 | 30-12-2021 | CN | 113850729 A | 28-12-2021 |
| | | | JP | 7479959 B2 | 09-05-2024 |
| | | | JP | 2022006869 A | 13-01-2022 |
| | | | US | 2021407048 A1 | 30-12-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022006869 A